# EUROPEAN PATENT SPECIFICATION

(11) **EP 4 419 976 B1**
(45) Date of publication and mention of the grant of the patent: **15.10.2025**
(21) Application number: 22741590.8
(22) Date of filing: 30.06.2022
(51) Int. Cl.: G05D 1/00

(54) **IMPROVED NAVIGATION FOR A ROBOTIC LAWNMOWER**
VERBESSERTE NAVIGATION FÜR EIN MÄHROBOTER
NAVIGATION AMÉLIORÉE POUR UNE TONDEUSE ROBOTISÉE

(30) Priority: 19.10.2021 SE 2151275
(43) Date of publication of application: 28.08.2024
(73) Proprietor: Husqvarna AB, 561 82 Huskvarna (SE)
(72) Inventor: KAMFORS, Mattias, 554 48 Jönköping (SE); LANDIN, Rickard, 554 59 Jönköping (SE)
(86) International application number: PCT/SE2022/050658
(87) International publication number: WO 2023/068976

(56) References cited:
- US-A1- 2017 031 368
- US-A1- 2019 080 142
- URZUA SARQUIS ET AL: "Vision-based SLAM system for MAVs in GPS-denied environments", INTERNATIONAL JOURNAL OF MICRO AIR VEHICLES, vol. 9, no. 4, 6 June 2017 (2017-06-06), pages 283 - 296, XP055958768, ISSN: 1756-8293, Retrieved from the Internet <URL:http://journals.sagepub.com/doi/full-xml/10.1177/1756829317705325> DOI: 10.1177/1756829317705325
- ANDERSEN JENS ET AL: "Vision Assisted Laser Scanner Navigation for Autonomous Robots", PROCEEDINGS OF THE 10TH INTERNATIONAL SYMPOSIUM ON EXPERIMENTAL ROBOTICS PROCEEDINGS OF THE 10TH INTERNATIONAL SYMPOSIUM ON EXPERIMENTAL ROBOTICS 2006 (ISER '06), VOL 39, 10 July 2006 (2006-07-10), pages 111 - 120, XP055958996, Retrieved from the Internet <URL:https://backend.orbit.dtu.dk/ws/portalfiles/portal/3670857/vision-laser-navigation.pdf> [retrieved on 20220908]
- COLLIER JACK ET AL: "Autonomous Navigation and Mapping in GPS-Denied Environments at Defence R&D Canada", RTO-MP-SET-168, 30 January 2012 (2012-01-30), XP055959639, Retrieved from the Internet <URL:http://asrl.utias.utoronto.ca/~tdb/bib/collier_nato12.pdf> [retrieved on 20220912]

## Description

### TECHNICAL FIELD

This application relates to a robotic work tool and in particular to a system and a method for providing an improved navigation for robotic work tools, such as lawnmowers, in such a system.

### BACKGROUND

Automated or robotic work tools such as robotic lawnmowers are becoming increasingly more popular and so is also the demand for advanced functions of the robotic work tools. To satisfy such demands, precise navigation is required, for example for navigating safely in an area without exceeding a border of the operational area, navigating specific patterns, navigating around specific buildings (or other structures) or natural features (including flower beds and so on). Such precise navigation is usually dependent on satellite navigation, for example GNSS (Global Navigation Satellite System), GPS (Global Positioning System) or beacon supplemented satellite navigation such as RTK (Real Time Kinematic). Other beacon-based navigation technologies are for example use of UWB (Ultra WideBand) beacons. Such systems have in common that they rely on that the robotic work tool receives one or more signals from satellites or beacons (acting as reference stations) and that those signals are received reliably.

As such signals need be received reliably for an accurate navigation, the robotic work tool may suffer in areas where reliable signal reception is not possible or available, such as in satellite shadows.

The prior art shows many proposals for a solution to this problem, which has been around for many, many years dating back to 2008, and is thus a long-standing problem. All such solutions rely on a deduced reckoning possibly in combination with SLAM (Simultaneous Localization And Mapping) technologies.

The patent application published as US2019/080142A1 discloses a method that involves operating an unmanned aerial vehicle (UAV) to begin a flight, where the UAV relies on a navigation system to navigate to a destination. During the flight, the method involves operating a camera to capture images of the UAV's environment, and analyzing the images to detect features in the environment. The method also involves establishing a correlation between features detected in different images, and using location information from the navigation system to localize a feature detected in different images. Further, the method involves generating a flight log that includes the localized feature. Also, the method involves detecting a failure involving the navigation system, and responsively operating the camera to capture a post-failure image. The method also involves identifying one or more features in the post-failure image, and determining a location of the UAV based on a relationship between an identified feature and a localized feature.

The article URZUA SARQUIS ET AL.: 'Vision-based SLAM system for MAVs in GPS-denied environments',INTERNATIONAL JOURNAL OF MICRO AIR VEHICLES,vol. 9, no. 4, 6 June 2017, pages 283-296, XP055958768,ISSN: 1756-8293, DOI: 10.1177/1756829317705325 (URL: http://journals.sagepub.com/doi/full-xml/10.1177/1756829317705325") discloses GPS navigation aided by VSLAM.

The patent application published as US2017031368A1 discloses robotic work tool system comprising a charging station and a robotic work tool, said robotic work tool comprising a position determining device for determining a current position, the robotic work tool being configured to determine that reliable navigation through said position determining device is no longer possible, such as when satellite signal reception is not possible, at a time point (T1) and position and in response thereto generate an obstacle map which gives information on the position of at least one obstacle, determine when an area will be shadowed with regards to satellite reception based on said obstacle map, and to schedule operation of the robotic work tool accordingly.

The article Andersen Jens ET AL: "Vision Assisted Laser Scanner Navigation for Autonomous Robots", Proceedings of the 10th International Symposium on Experimental Robotics 2006 (ISER '06), vol 39, 10 July 2006, pages 111-120, XP055958996, (URL:https://backend.orbit.dtu.dk/ws/portalfiles/portal/3670857/vision-laser-navigation.pdf) discloses a method for Vision Assisted Laser Scanner Navigation for Autonomous Robots.

The article Collier Jack ET AL: "Autonomous Navigation and Mapping in GPS-Denied Environments at Defence R&D Canada",RTO-MP-SET-168, 30 January 2012, XP055959639, (URL:http://asrI.utias.utoronto.ca/-tdb/bib/coIIier_nat012.pdf) discloses a method for Vision Assisted Laser Scanner Navigation for Autonomous Robots.

However such solutions all suffer from problems relating to an estimated location/direction determined based on relative measurements. Furthermore, the use of SLAM is relatively costly requiring vast computing resources and several sensors (including accelerometers and visual systems) to function.

Thus, there is a need for an improved manner of navigating robotic work tools.

### SUMMARY

The inventors have further realized that since satellites are not always stationary, such shadowed areas may move and a mapping of shadowed area may not be sufficient as the shadow area may be in different locations. Solutions relying on absolute positions of known shadowed area, may thus not be sufficient, as the shadowed areas may vary or occur in new places.

It is therefore an object of the teachings of this application to overcome or at least reduce those problems by providing a robotic work tool arranged to operate in an operational area, the robotic work tool comprising a memory configured to store a location of at least one object, a distance sensor, a navigation sensor being based on signal-reception and a controller, wherein the controller is configured to: determine a location of the robotic work tool utilizing the navigation sensor; determine that a shadowed area is encountered, wherein navigation utilizing the navigation sensor is not reliable; and in response thereto navigate utilizing the distance sensor based on detecting at least one object and a distance to the at least one object utilizing the distance sensor, the stored at least one object and the location of the robotic work tool according to the appended claims.

In some embodiments the controller is further configured to determine that the shadowed area is encountered by determining that the robotic work tool has entered the shadowed area.

In some embodiments the controller is further configured to determine that the shadowed area is sufficiently mapped and in response thereto enter the shadowed area.

In some embodiments the controller is further configured to determine that the shadowed area is sufficiently mapped by determining that there are stored objects that will be visible to the robotic work tool along a planned path of the robotic work tool.

In some embodiments the controller is further configured to determine that determining that the robotic work tool has entered the shadowed area and in response thereto exit the shadowed area.

In some embodiments the controller is further configured to determine that the shadowed area is insufficiently mapped and in response thereto map the shadowed area by: detecting at least one object at a first position; change to a second position; and detecting at least one second object at the second position.

In some embodiments the controller is further configured to change to the second position by moving to the second position.

In some embodiments the controller is further configured to change to the second position by zigzagging.

In some embodiments the controller is further configured to change to the second position by rotating.

In some embodiments the controller is further configured to change to the second position by circumnavigating an object or the shadowed area

In some embodiments the controller is further configured to proactively map a future shadowed area by: detecting at least one object at a first position; change to a second position; and detecting at least one second object at the second position, regardless detection of a shadowed area.

In some embodiments the distance sensor is a radar sensor.

In some embodiments the controller is further configured to detect an object utilizing the distance sensor by: receiving a radar point cloud; determining a location of the radar point cloud; and record the object at the determined location.

In some embodiments the controller is further configured to determine that the object is not moving prior to recording the determined location.

In some embodiments the controller is further configured to determine an extension of the radar point cloud, determine an assumed shadow based on the extension of the radar point cloud and map an area of the assumed shadow.

In some embodiments the controller is further configured to perform a visual classification of the object and determine the assumed shadow also based on the visual classification.

In some embodiments the map is stored in a remote memory connected to the robotic work tool directly or indirectly.

It is also an object of the teachings of this application to overcome the problems by providing a method for use in a robotic work tool arranged to operate in an operational area, the robotic work tool comprising a memory configured to store a location of at least one object, a distance sensor, a navigation sensor being based on signal-reception and a controller, the method comprising: determining a location of the robotic work tool utilizing the navigation sensor; determining that a shadowed area is encountered, wherein navigation utilizing the navigation sensor is not reliable; and in response thereto navigating utilizing the distance sensor based on detecting at least one object and a distance to the at least one object utilizing the distance sensor, the stored at least one object and the location of the robotic work tool according to the appended claims.

The robotic work tool is a robotic lawnmower.

Further embodiments and aspects are as in the attached patent claims and as discussed in the detailed description.

It should be noted that object is detected in the present application even before any problems with the satellite reception is detected or encountered. It is thus not a simple navigation based on the radar as an alternative sensor, but a predicted navigation where it is ensured that objects are available for navigation in an area where satellite signals are not reliably received. The teachings herein thus provide to proactively ensure that navigation is enabled in shadowed areas.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to some embodiments of the teachings herein;
Figure 1B shows a schematic view of the components of an example of a robotic work tool being a robotic lawnmower according to some example embodiments of the teachings herein;
Figure 2A shows a schematic view of a robotic work tool system according to some example embodiments of the teachings herein;
Figure 2B shows a schematic view of a robotic work tool system according to some example embodiments of the teachings herein;
Figure 2C shows a schematic view of a robotic work tool system according to some example embodiments of the teachings herein;
Figure 2D shows a schematic view of a robotic work tool system according to some example embodiments of the teachings herein;
Figure 2E shows a schematic view of a robotic work tool system according to some example embodiments of the teachings herein;
Figure 2F shows a schematic view of a robotic work tool system according to some example embodiments of the teachings herein;
Figure 2G shows a schematic view of a robotic work tool system according to some example embodiments of the teachings herein;
Figure 3A shows a corresponding flowchart for a method according to some example embodiments of the teachings herein;
Figure 3B shows a corresponding flowchart for a method according to some example embodiments of the teachings herein;
Figure 4A shows a schematic view of a robotic work tool detecting object(s) according to some example embodiments of the teachings herein;
Figure 4B shows a schematic view of a robotic work tool detecting object(s) according to some example embodiments of the teachings herein;
Figure 4C shows a schematic view of a robotic work tool detecting object(s) according to some example embodiments of the teachings herein;
Figure 4D shows a schematic view of a robotic work tool detecting object(s) according to some example embodiments of the teachings herein; and
Figure 5 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

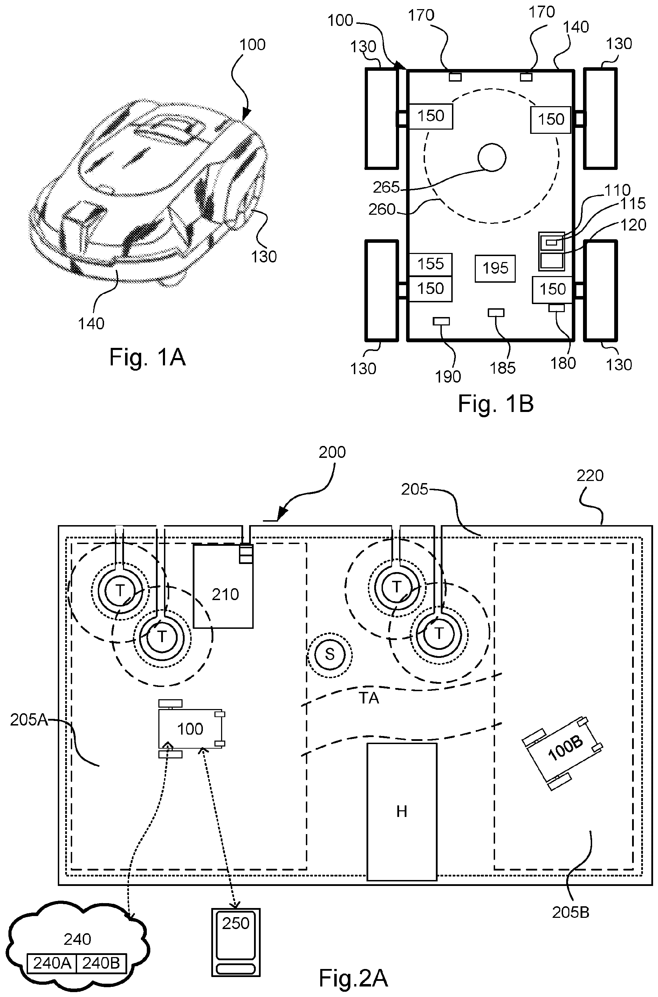

Figure 1A shows a perspective view of a robotic work tool 100, here exemplified by a robotic lawnmower 100, having a body 140 and a plurality of wheels 130 (only one side is shown). The robotic work tool 100 may be a multi-chassis type or a mono-chassis type (as in figure 1A). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focused on the example of a robotic lawnmower, the teachings may equally be applied to other types of robotic work tools, such as robotic watering tools, robotic golfball collectors, and robotic mulchers to mention a few examples.

It should also be noted that the robotic work tool is a self-propelled robotic work tool, capable of autonomous navigation within a work area, where the robotic work tool propels itself across or around the work area in a pattern (random or predetermined).

Figure 1B shows a schematic overview of the robotic work tool 100, also exemplified here by a robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 150, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed under figure 1A,

The controller 110 may be implemented using any suitable, available processor or Programmable Logic Circuit (PLC). The memory 120 may be implemented using any commonly known technology for computer-readable memories such as ROM, FLASH, DDR, or some other memory technology.

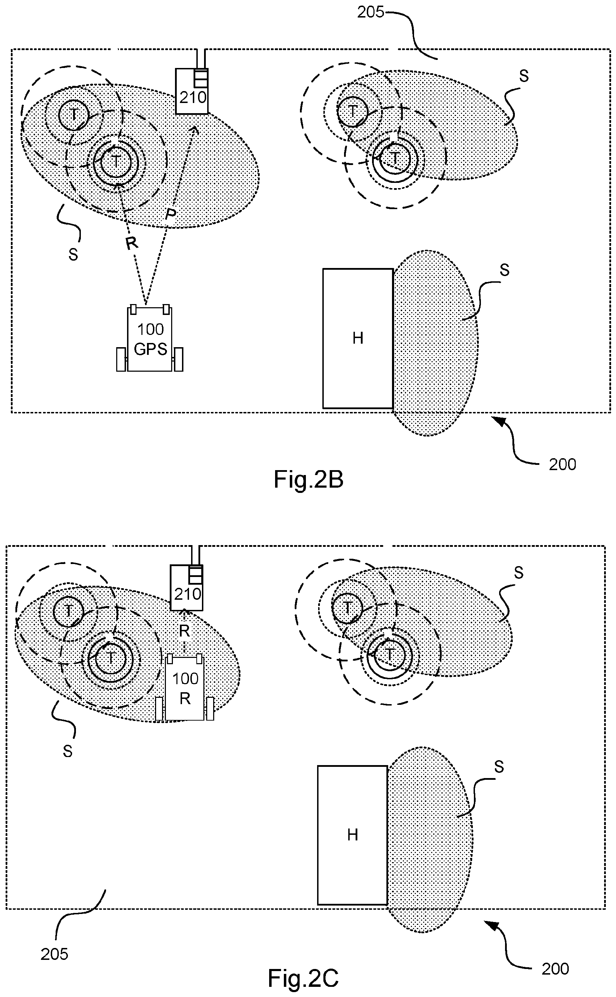

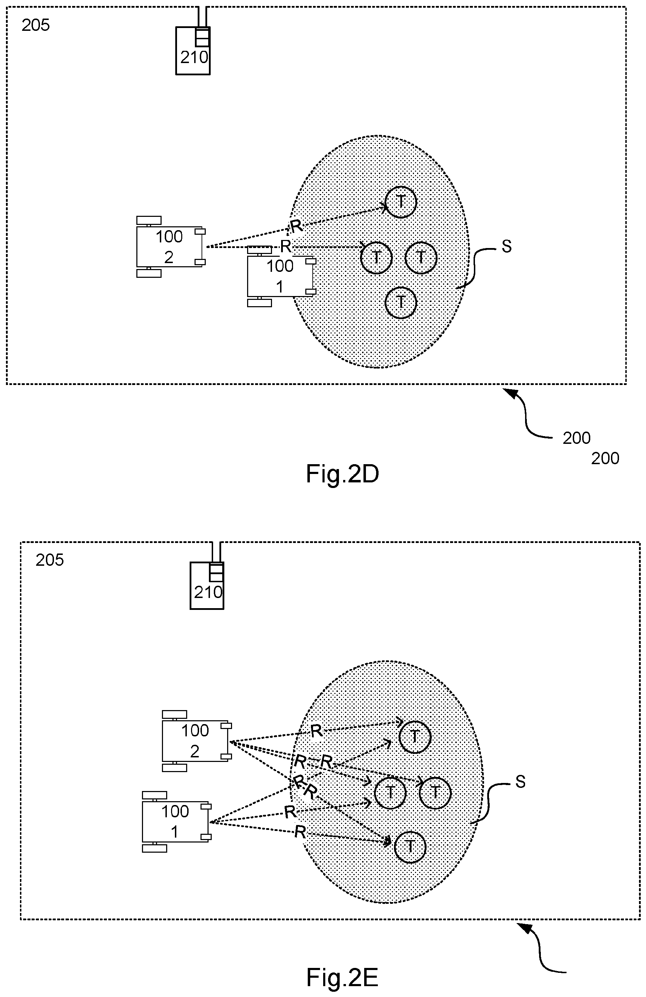

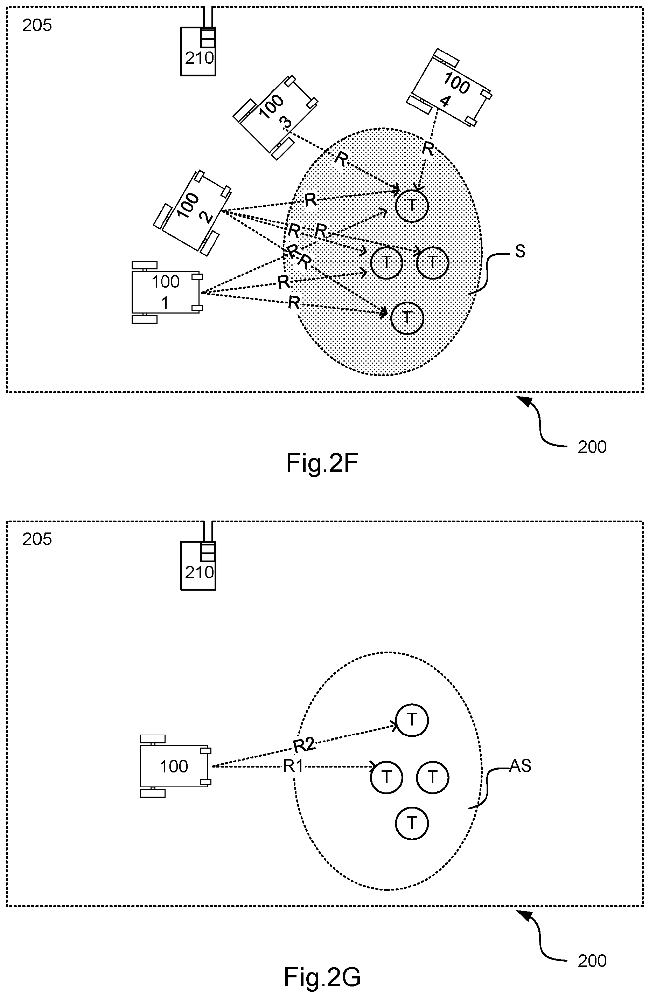

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment 200 as discussed in relation to figure 2 below for providing information regarding status, location, and progress of operation to the user equipment 200 as well as receiving commands or settings from the user equipment 200. Alternatively or additionally, the robotic lawnmower 100 may be arranged to communicate with a server (referenced 240 in figure 2A) for providing information regarding status, location, and progress of operation as well as receiving commands or settings.

The robotic lawnmower 100 also comprises a grass cutting device 160, such as a rotating blade 160 driven by a cutter motor 165. The grass cutting device being an example of a work tool 160 for a robotic work tool 100.

The robotic lawnmower 100 may further comprise at least one navigation sensor, such as a beacon navigation sensor and/or a satellite navigation sensor 185. The optical navigation sensor may be a camera-based sensor and/or a laser-based sensor. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device (or other Global Navigation Satellite System (GNSS) device) or a RTK device. For the purpose of the teachings herein, the navigation device is considered to provide a reliable reception if a sufficient number of signals are received at a signal quality level enabling an accurate determination of a location. In some embodiments, such accurate determination is possible if the determination is made with an error margin under 0.5 m, under 0.3 m, under 0.2 m or in any range 0-0.5 m. As is known such accurate determination is possible when the signal quality of the received signals exceeds a threshold value.

As the robotic work tool operates utilizing or relying on satellite (or other signal) navigation, that is, when utilizing or relying on the navigation sensor 185 (also referred to as a signal reception-based navigation sensor), the robotic work tool is considered to operate in a signal reception-based also referred to as a GPS mode for embodiments where the navigation sensor comprises a GPS, GNSS, RTK or similar sensor.

In embodiments, where the robotic lawnmower 100 is arranged with a navigation sensor 185, the magnetic sensors 170 as will be discussed below are optional. In embodiments relying (at least partially) on a navigation sensor, the work area may be specified as a virtual work area in a map application stored in the memory 120 of the robotic lawnmower 100. The virtual work area may be defined by a virtual boundary. Even in embodiments where the map is stored remotely, at least parts of the map may be stored locally in the memory during operation. Alternatively any comparisons made with the map remotely may be seen as being made by the controller in configuration with the memory as tit is caused by the controller and performed on data stored in the memory, such as an indicator of the map and the location of the robotic work tool, which both are at least temporarily stored in the memory.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a boundary wire emitting a magnetic field caused by a control signal transmitted through the boundary wire, the robotic lawnmower 100 is, in some embodiments, further configured to have at least one magnetic field sensor 170 arranged to detect the magnetic field and for detecting the boundary wire and/or for receiving (and possibly also sending) information to/from a signal generator (will be discussed with reference to figure 1). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. This enables the controller 110 to determine whether the robotic lawnmower 100 is close to or crossing the boundary wire, or inside or outside an area enclosed by the boundary wire.

As mentioned above, in some embodiments, the robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the operational area 205. In some embodiments, the map application includes one or more start regions and one or more goal regions for each work area. In some embodiments, the map application also includes one or more transport areas.

As discussed in the above, the map application is in some embodiments stored in the memory 120 of the robotic working tool(s) 100. In some embodiments the map application is stored in the server (referenced 240 in figure 2A). In some embodiments maps are stored both in the memory 120 of the robotic working tool(s) 100 and in the server, wherein the maps may be the same maps or show subsets of features of the area.

The robotic working tool 100 may also comprise additional sensors 190 for enabling operation of the robotic working tool 100, such as visual sensors (for example a camera), ranging sensors for enabling SLAM-based navigation (Simultaneous Localization and Mapping), moisture sensors, collision sensors, wheel load sensors to mention a few sensors. In particular, in some embodiments, the robotic work tool 100 comprises at least one visual sensor for receiving visual indications that may be interpreted to correspond to movement information.

The robotic work tool 100 also comprises one or more radar sensors 195 enabling the robotic work tool to detect an object and to determine a distance (and a direction or a distance in a direction) to the object by emitting and receiving reflected radar signals.

It should be noted that the robotic work tool 100 may - in alternative or additional embodiments, be arranged with other distance sensors, the radar sensor being an example of a distance sensor. Other examples include ultra sound distance sensors, LIDARs, time-of-flight sensors, and/or stereo cameras. The robotic work tool is also enabled to differentiate between a stationary object and a moving object based on the reception of the radar signals based on a Doppler effect affecting the received radar signals or not. More details on this will be discussed further below. It should be noted that radar sensors provide a more or less exact distance and direction to an object without any scaling, such as when utilizing visual determination of distance and direction. The functioning of a radar can vary greatly between different models, but is considered to be known to a skilled person, even if the usage of radar as discussed herein is not previously known.

The robotic work tool according to the teachings herein is thus enabled to navigate utilizing the radar sensor(s) 195. In some embodiments, the robotic work tool is thus enabled to determine distances and directions to objects and determine its location with regards to these objects, and possibly also its absolute position based on the location of these object(s), possibly as stored in the map application.

As the robotic work tool operates utilizing or relying on radar navigation, that is, when utilizing or relying on the navigation sensor 185 (also referred to as a signal reception-based navigation sensor), the robotic work tool is considered to operate in a radar mode.

Figure 2A shows a robotic work tool system 200 in some embodiments. The schematic view is not to scale. The robotic work tool system 200 comprises one or more robotic work tools 100 according to the teachings herein. It should be noted that the operational area 205 shown in figure 2A is simplified for illustrative purposes. The robotic work tool system comprises a boundary 220 that may be virtual and/or electro mechanical such as a magnetic field generated by a control signal being transmitted through a boundary wire, and which magnetic field is sensed by sensor in the robotic work tool 100.

The robotic work tool system 200 further comprises a station 210 possibly at a station location. A station location may alternatively or additionally indicate a service station, a parking area, a charging station or a safe area where the robotic work tool may remain for a time period between or during operation session.

As with figures 1A and 1B, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

The one or more robotic working tools 100 of the robotic work tool system 200 are arranged to operate in an operational area 205, which in this example comprises a first work area 205A and a second work area 205B connected by a transport area TA. However, it should be noted that an operational area may comprise a single work area or one or more work areas, possibly arranged adjacent for easy transition between the work areas, or connected by one or more transport paths or areas, also referred to as corridors. In the following work areas and operational areas will be referred to interchangeably, unless specifically indicated.

The operational area 205 is in this application exemplified as a garden, but can also be other operational areas as would be understood, such as an airfield. As discussed above, the garden may contain a number of obstacles, for example a number of trees, stones, slopes and houses or other structures.

In some embodiments the robotic work tool is arranged or configured to traverse and operate in operational areas or work areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The operational area 205 exemplified with referenced to figure 2A, may thus be such a non-uniform work area as disclosed in this paragraph that the robotic work tool is arranged to traverse and/or operate in.

As shown in figure 2A, the robotic working tool(s) 100 is arranged to navigate in one or more work areas 205A, 205B, possibly connected by a transport area TA.

The robotic working tool system 200 may alternatively or additionally comprise or be arranged to be connected to a server 240, such as a cloud service, a cloud server application or a dedicated server 240. The connection to the server 240 may be direct from the robotic working tool 100, direct from a user equipment 250, indirect from the robotic working tool 100 via the service station 210, and/or indirect from the robotic working tool 100 via the user equipment 250.

As a skilled person would understand that a server, a cloud server or a cloud service may be implemented in a number of ways utilizing one or more controllers 240A and one or more memories 240B that may be grouped in the same server or over a plurality of servers.

In the below several embodiments of how the robotic work tool may be adapted will be disclosed. It should be noted that all embodiments may be combined in any combination providing a combined adaptation of the robotic work tool.

Figure 2B shows a simplified, schematic view of the robotic work tool system 200 as disclosed in relation to figure 2A. In Figure 2B areas are indicated as shadows S, where signal reception for GPS\RTK may not be reliable and wherein the navigation may thus suffer or be inaccurate. Even if an accuracy of approximately 0.5 meter may seem sufficient for mowing a lawn, it could be noted that an accuracy of 0.5 meters would for sure not be accurate when operating close to for example a flower bed. The need for a very high precision navigation is thus in demand in all areas of an operational area, with regards to placement of shadows,

The inventors have realized that as radar sensors provide highly accurate if not perfect distances and directions as opposed to the estimations provided by both SLAM and deduced reckoning, radar can beneficially be used for robotic work tools to improve navigation in areas where satellite (or other navigation signals) reception is not possible or available, i.e. in (GPS) shadows.

In figure 2B it is indicated how a robotic work tool 100 operates in a GPS mode (as indicated in figure 2B) where signal reception is reliable and location determination is very accurate. For example, utilizing RTK, the error margin/accuracy is under 0.1 m. Also indicated in figure 2B is how the robotic work tool 100 determines a distance and a direction or possibly a distance in a direction to one or more objects utilizing the radar sensor 195, as indicated by the dotted arrows referenced R. As the robotic work tool knows its own location at a very high accuracy, and as radar reception is highly accurate, the robotic work tool is thus configured to determine the absolute position of the object(s) based on the own position, the distance and the direction to the object(s), at a similarly high accuracy.

The robotic work tool is thus configured to determine a location of at least one object utilizing the radar sensor and the navigation sensor, when operating in the signal reception mode.

The position of the object is stored, possibly in the map application, or otherwise recorded. A planned path of the robotic work tool 100 is indicated by a dotted arrow referenced P.

Figure 2C shows a simplified view of a robotic work tool system 200 as in figure 2A and Figure 2B. Figure 2C shows how the robotic work tool 100 enters a shadowed area, and determines that signal-reception based navigation using the navigation sensor 185 is no longer reliable, and then switches over to a radar based navigation and operates in a radar (navigation) mode (as indicated by R). In the radar (navigation) mode, the robotic work tool 100 navigates by determining distance and or in directions to surrounding objects and determines or updates its own location accordingly. As the location of the objects have been determined at a high accuracy, and as the radar is of high accuracy, the determined location is also of a high accuracy and the navigation can continue in the shadow S at a high accuracy.

In some embodiments the robotic work tool is configured to determine that a shadow area is (possibly) being encountered or about to be entered, and in response thereto determine whether the shadowed area is mapped, i.e. if there are previously recorded objects in the shadowed area, or at least in the planned path of the robotic work tool 100.

In some such embodiments the robotic work tool is configured to determine that the shadowed area is encountered by determining that a current signal reception is below a threshold, i.e. to determine that (satellite) signal reception is no longer reliably received. In other words, that the robotic work tool has entered a shadowed area. In such embodiments the robotic work tool is configured to exit the shadowed area, by reversing out along the same path used to enter the shadowed area. The robotic work tool is thus also configured to store paths taken. Possibly storing only the last navigation actions taken for example during a time period of up to 1, 2 or 5 minutes. Possibly storing all navigation actions taken in a work session. Possibly storing only the last navigation actions taken for example during a travelled distance of up to 1, 2 or 5 meters. These possibilities may or may not be combined. A navigation action relating to a speed, a direction a turn and/or a time period for such an action.

In some such embodiments the robotic work tool is configured to determine that the shadowed area is encountered by determining that a current signal reception is falling. This may be determined based on comparing a received signal quality with a previously received signal. Alternatively this may be determined by monitoring or determining a derivate of the signal reception.

If it is determined that the shadowed area is encountered (possibly having been entered and exited), and if it is determined that the shadowed area is not sufficiently mapped, the robotic work tool detects objects in the shadowed area utilizing the radar sensor so that the shadowed area becomes sufficiently mapped.

In some embodiments, the determination whether the shadowed area is sufficiently mapped is made by determining that there are recorded objects that will be detectable by the robotic work tool as the robotic work tool traverses a planned path.

In some embodiments, the determination whether the shadowed area is sufficiently mapped is made by determining that there are recorded objects that will be detectable by the robotic work tool as the robotic work tool traverses an assumed shadowed area.

In some embodiments the robotic work tool 100 maps the shadowed area by detecting further objects in the shadowed area, or along a planned path.

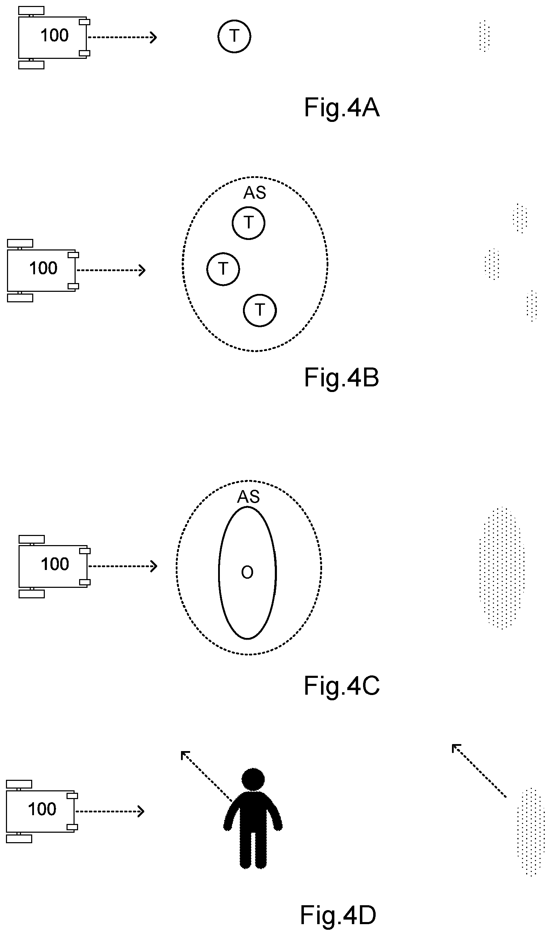

In some such embodiments, and as shown in figure 2D, the robotic work tool detects further objects by moving to a second position and detecting objects from that second position. In figure 4C, it is shown that the robotic work tool 100 has moved from a first position (indicated by the robotic work tool referenced 100:1) to a second position (indicated by the robotic work tool referenced 100:2).

In the example of figure 2D it is shown how the robotic work tool has entered the shadowed area in the first position. However, it should be noted that this also applies to embodiments where the robotic work tool does not enter the shadowed area until it is sufficiently mapped. As is shown in figure 2E, showing a simplified schematic view of the robotic work tool system 200 of figures 2A, 2B, 2C and 2D, the robotic work tool is able to detect other objects when being in the second position.

The second position is, in some embodiments assumed by rotating (at least a portion of a circle) the radar sensor 195and/or the robotic work tool 100 and thereby the radar sensor 195.

The second position is, in some embodiments assumed by moving to a second position.

The second position is, in some embodiments assumed by zigzagging the robotic work tool while moving.

The second position is, in some embodiments assumed by the robotic work tool circumnavigating at least partially, the shadowed area, as shown in in figure 2F. In some such embodiments the robotic work tool is configured to circumnavigate the shadowed area, by circumnavigating an assumed shadowed area. In some such embodiments the robotic work tool is configured to circumnavigate the shadowed area, by circumnavigating a detected object. In either case, multiple positions will be assumed which all gives a different view into the shadowed area, enabling more objects to be detected and recorded.

In some such alternative or additional embodiments, and as shown in figure 2G, the robotic work tool detects an object - possibly after having entered or encountered a shadowed area, and determines an assumed shadowed area around the detected object(s). If multiple objects are detected the assumed shadowed area, may be assumed to encompass all or some of the multiple objects.

This enables the robotic work tool to have a reference while navigating in GPS/RTK mode to enable for ensuring sufficient mapping in an assumed shadowed area, for future use, even if the assumed shadowed area does not correspond to a real shadowed area, partially or at all.

As the robotic work tool determines that the shadowed area is sufficiently mapped, the robotic work tool switches to the radar mode and enters the shadowed area. The switch may be made proactively before entering the shadowed area, ie. before losing reception. The switch may be made proactively after entering the shadowed area, ie. when losing reception. The switch may also be made while still using the navigation sensor 185.

In some embodiments, the robotic work tool is configured to automatically assume a shadowed area around any newly detected object and move to a second position (in any manner as discussed above) to ensure that any further or second object obscured by the newly detected object is also detected.

In case the robotic work tool determines that a currently navigated shadowed area is not sufficiently mapped, the robotic work tool may exit the shadowed area (possibly along the same path as used when entering the shadowed area) and remap the area, based on the robotic work tool's newly gained knowledge on where the shadowed area is no longer sufficiently mapped.

In some embodiments, as an alternative to exiting the shadowed area the robotic work tool may instead continue to map the shadow area based on its current position known from previously mapped object in the shadow area.

The inventor has realized that there will always be object to base navigation on in a shadowed area. If there are no objects, then there will also not be any shadow. The teachings herein thus provide for a highly reliable and accurate manner of navigating a robotic work tool usable in all areas.

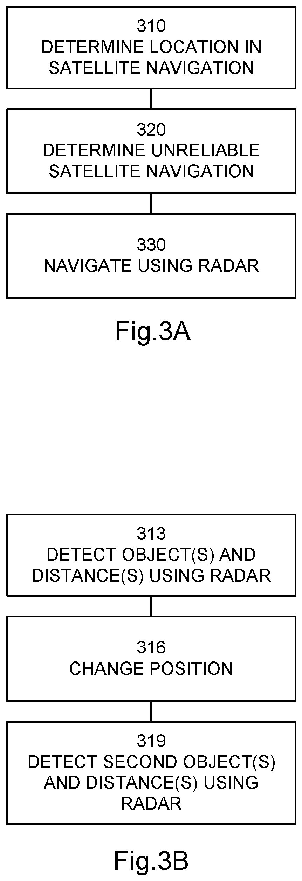

Figure 3A shows a flowchart for a general method according to herein. The method is for use in a robotic work tool as in figures 1A and 1B. The method comprises determining 310 a location of the robotic work tool while navigating ia signal reception mode, more specifically in a satellite (including supplemented) navigation mode (such as GPS or RTK), and to determine 320 that signal reception-based navigation is no longer reliable, and in response thereto switch to a radar-based navigation, and navigate 330 utilizing radar sensor(s) 195.

A robotic work tool may thus in some embodiments be configured to perform the method according to figure 3A.

Figure 3B shows a flowchart for a general method according to herein. The method is for use in a robotic work tool as in figures 1A and 1B. The method is for use when mapping an area, such as a shadowed area, and the method comprises detecting 313 one (or more) object(s) and the distance(s) to the object(s) (including the direction or in a direction to the object(s)). The robotic work tool then changes position 316 (such as moving to a second position as discussed in relation to figures 2C, 2D, 2F and 2G) and detects 319 one (or more) second object(s) and the distance(s) to the second object(s) (including the direction or in a direction to the second object(s)). This enables for all or most objects in an area, such as a shadowed area, to be detected and mapped.

A robotic work tool may thus in some embodiments be configured to perform the method according to figure 3B, possibly in combination or as part of performing the method according to figure 3A.

Figure 4A shows a schematic view of how a robotic work tool detects an object. the robotic work tool 100 transmits a radar signal and receives a reflection utilizing the radar sensor 195. The received reflection will be received as one or more, most likely a plurality of points in an X,Y or X, Y, Z space. The plurality of points is thus received (directly or already filtered) or may be considered as a point cloud (possibly comprising a single point). By determining the extent of the point cloud an assumed shadow may be determined. In figure 4A, a single relatively narrow object is received, whereby it may be assumed that there is no shadowed area.

Figure 4B shows a schematic view of how a robotic work tool detects multiple objects. In the example of figure 4B, the radar sensor will receive a point cloud having an extension. Alternatively the radar sensor will receive three point clouds grouped close together, which may be assumed to have a common extension. In this case, the extension exceeds a threshold and it can be assumed that there may be a shadowed area in relation to the detected objects. An assumed shadow may thus be determined as encompassing the detected objects and also extending out from the detected objects. The assumed shadow can be determined to extend from the objects a distance related to a height of the detected objects.

Figure 4C shows a schematic view of how a robotic work tool detects a large object. In the example of figure 4C, the radar sensor will receive a point cloud having an extension. In this case, the extension exceeds a threshold and it can be assumed that there may be a shadowed area in relation to the detected object, as in figure 4B. An assumed (or detected) shadow may thus be determined as encompassing the detected object and also extending out from the detected object. The assumed shadow can be determined to extend from the object a distance related to a height of the detected object.

As discussed in relation to figure 1B, a radar is also able to determine a speed of a detected object. The received point or point cloud will thus also be associated with a speed detected based on a Doppler effect. The robotic work tool may in such embodiments be configured to determine that an object is moving. As a navigation based on moving objects cannot be trusted, the moving object is not recorded for use as a reference. The moving object may of course be recorded for other uses.

Figure 4D shows a schematic view of how a robotic work tool detects a moving object, in this example a human moving as indicated by the dotted arrow extending from the human. In the example of figure 4D, the radar sensor will receive a point cloud having an extension and a speed vector (speed and direction).

It should be understood that as the robotic work tool is itself moving, all point clouds will be received as having a speed vector, however, objects that are actually moving will be received as a point cloud having a speed vector with a different speed than the stationary ones. As a skilled person would understand, the scalar value of the speed vector (i.e the speed) depends on the speed relative the robotic work tool, and can be determined and taken into account. In some such embodiments, the speed of the robotic work tool is also determine and subtracted from the received speed for an object.

In some embodiments, the robotic work tool is also configured to not only determine an extension of the detected object, but also to classify the object by supplemental visual detection of the object. In embodiments where the robotic work tool is arranged with a camera or other imaging device, the robotic work tool may capture an image of the detected object and classify the object based on the image. The classification of an object may be associated with an assumed shadow. For example, a roof (such as a car port), will for sure be associated with an assumed shadow extending under the roof. A single tree may not be associated with a shadow, unless the tree is very large, but a group of trees may be associated with an assumed shadow encompassing the tress.

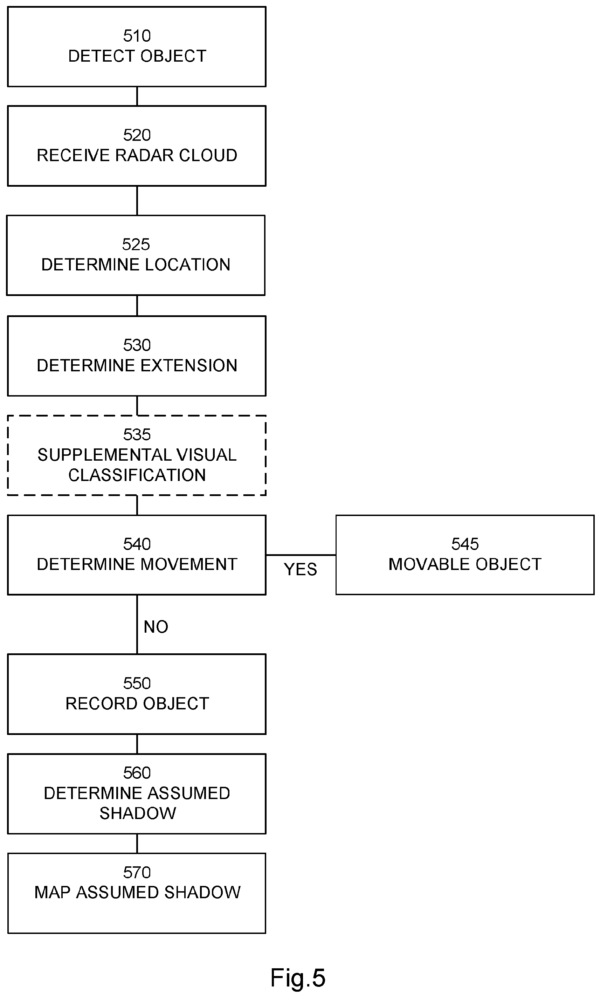

Figure 5 shows a general flowchart according to a method of the teachings herein, where a robotic work tool 100 is enabled to detect 510 an object, by 520 receiving a radar point cloud, determining a location of the object by determining a location 525 of the radar point cloud and determining 530 an extension of the radar point cloud, and thereby an extension of the object. Optionally the detection of the object, is supplemented 535 by a visual classification of the object. The robotic work tool is also configured to detecting a movement 540 of the point cloud and if so determine 545 that the object is a moving object which is not to be recorded for use a reference. If no movement is detected, the object is determined to be stationary and recorded 550 for future use as a reference. Optionally, an assumed shadow may be determined 560 for the detected object and the robotic work tool may then map 570 the assumed shadow in any manner as discussed herein.

It should be noted that even if the object(s) has been discussed as being in the operational area, any object in or next to, i.e an object in the surrounding, may be detected and used for navigation. Also, a shadow may very well be caused by an object outside the operational area, wherefore not only objects in the operational area are detected.

A robotic work tool may thus in some embodiments be configured to perform the method according to figure 5, possibly in combination or as part of performing the method according to any or both of figures 3A and 3B.

## Claims

1. A robotic lawnmower (100) arranged to operate in an operational area, the robotic lawnmower comprising a memory configured to store a location of at least one object, a distance sensor (195), a navigation sensor (185) being based on signal-reception and a controller, wherein the controller is configured to:
determine a location of the robotic lawnmower (100) utilizing the navigation sensor (185);
determine that a shadowed area is encountered, wherein navigation utilizing the navigation sensor is not reliable; and in response thereto
navigate utilizing the distance sensor in the shadowed area based on detecting at least one object and a distance to the at least one object utilizing the distance sensor (195), the stored location of the at least one object and the location of the robotic lawnmower (100), wherein the robotic lawnmower **is characterized in that** the controller is further configured to determine that the shadowed area is sufficiently mapped and in response thereto enter the shadowed area, wherein the controller is further configured to determine that the shadowed area is sufficiently mapped by determining that there are stored objects that will be detectable by the robotic lawnmower utilizing the distance sensor (195) along a planned path of the robotic lawnmower.

2. The robotic lawnmower (100) according to any preceding claim, wherein the controller is further configured to determine that the robotic lawnmower has entered the shadowed area and in response thereto exit the shadowed area.

3. The robotic lawnmower (100) according to any preceding claim, wherein the controller is further configured to determine that the shadowed area is insufficiently mapped and in response thereto map the shadowed area by:
detecting at least one object at a first position;
change to a second position; and
detecting at least one second object at the second position.

4. The robotic lawnmower (100) according to claim 3, wherein the controller is further configured to change to the second position by moving to the second position.

5. The robotic lawnmower (100) according to claim 3 or 4, wherein the controller is further configured to change to the second position by zigzagging.

6. The robotic lawnmower (100) according to claim 3, 4 or 5, wherein the controller is further configured to change to the second position by rotating.

7. The robotic lawnmower (100) according to claim 3, 4, 5 or 6, wherein the controller is further configured to change to the second position by circumnavigating an object or the shadowed area

8. The robotic lawnmower (100) according to any preceding claim, wherein the controller is further configured to proactively map a future shadowed area by:
detecting at least one object at a first position;
change to a second position; and
detecting at least one second object at the second position, regardless detection of a shadowed area.

9. The robotic lawnmower (100) according to any preceding claim, wherein the distance sensor is a radar sensor (195).

10. The robotic lawnmower (100) according to claim 9, wherein the controller is further configured to detect an object utilizing the distance sensor (195) by:
receiving a radar point cloud;
determining a location of the radar point cloud; and
record the object at the determined location.

11. The robotic lawnmower (100) according to claim 9 or 10, wherein the controller is further configured to determine that the object is not moving prior to recording the determined location.

12. The robotic lawnmower (100) according to claim 9, 10 or 11, wherein the controller is further configured to
determine an extension of the radar point cloud,
determine an assumed shadow based on the extension of the radar point cloud and
map an area of the assumed shadow.

13. The robotic lawnmower (100) according to claim 12, wherein the controller is further configured to perform a visual classification of the object and determine the assumed shadow also based on the visual classification.

14. The robotic lawnmower (100) according to any preceding claim, wherein the map is stored in a remote memory connected to the robotic lawnmower directly or indirectly.

15. A method for use in a robotic lawnmower (100) arranged to operate in an operational area, the robotic lawnmower comprising a memory configured to store a location of at least one object, a distance sensor (195), a navigation sensor (185) being based on signal-reception and a controller, the method comprising:
determining a location of the robotic lawnmower (100) utilizing the navigation sensor (185);
determining that a shadowed area is encountered, wherein navigation utilizing the navigation sensor is not reliable; and in response thereto
navigating utilizing the distance sensor in the shadowed area based on detecting at least one object and a distance to the at least one object utilizing the distance sensor (195), the stored location of the at least one object and the location of the robotic lawnmower (100), wherein the method is **characterized in that** the method further comprises
determining that the shadowed area is sufficiently mapped and in response thereto enter the shadowed area, wherein the method further comprises
determining that the shadowed area is sufficiently mapped by determining that there are stored objects that will be detectable by the robotic lawnmower utilizing the distance sensor (195) along a planned path of the robotic lawnmower.

## Patentansprüche

1. Rasenmähroboter (100), der für den Betrieb in einem Betriebsbereich angeordnet ist, wobei der Rasenmähroboter einen Speicher, der zum Speichern eines Ortes von mindestens einem Objekt konfiguriert ist, einen Abstandssensor (195), einen Navigationssensor (185), der auf Signalempfang basiert, und eine Steuerung umfasst, wobei die Steuerung konfiguriert ist zum:
Bestimmen eines Ortes des Rasemähroboters (100) unter Verwendung des Navigationssensors (185);
Bestimmen, dass ein beschatteter Bereich angetroffen wird, in dem die Navigation unter Verwendung des Navigationssensors nicht zuverlässig ist; und als Reaktion darauf
Navigieren unter Verwendung des Abstandssensors in dem beschatteten Bereich basierend auf dem Erkennen von mindestens einem Objekt und einer Entfernung zu dem mindestens einen Objekt unter Verwendung des Abstandssensors (195), des gespeicherten Ortes des mindestens einen Objekts und des Ortes des Rasenmähroboters (100), wobei der Rasenmähroboter **dadurch gekennzeichnet ist, dass** die Steuerung ferner konfiguriert ist, um zu bestimmen, dass der beschattete Bereich ausreichend kartiert ist, und als Reaktion darauf in den beschatteten Bereich hineinzufahren, wobei die Steuerung ferner konfiguriert ist, um zu bestimmen, dass der beschattete Bereich ausreichend kartiert ist, indem sie bestimmt, dass es dort gespeicherte Objekte gibt, die von dem Rasenmähroboter unter Verwendung des Abstandssensors (195) entlang einer geplanten Route des Rasenmähroboters erkannt werden können.

2. Rasenmähroboter (100) nach einem der vorstehenden Ansprüche, wobei die Steuerung ferner konfiguriert ist, um zu bestimmen, dass der Rasenmähroboter in den beschatteten Bereich hineingefahren ist, und als Reaktion darauf den beschatteten Bereich zu verlassen.

3. Rasenmähroboter (100) nach einem der vorstehenden Ansprüche, wobei die Steuerung ferner konfiguriert ist, um zu bestimmen, dass der beschattete Bereich nicht ausreichend kartiert ist, und als Reaktion darauf den beschatteten Bereich durch folgende Schritte zu kartieren:
Erkennen von mindestens einem Objekt an einer ersten Position;
Wechseln in eine zweite Position; und
Erkennen mindestens eines zweiten Objekts an der zweiten Position.

4. Rasenmähroboter (100) nach Anspruch 3, wobei die Steuerung ferner konfiguriert ist, um in die zweite Position zu wechseln, indem sie sich in die zweite Position bewegt.

5. Rasenmähroboter (100) nach Anspruch 3 oder 4, wobei die Steuerung ferner konfiguriert ist, um durch Zickzackfahren in die zweite Position zu wechseln.

6. Rasenmähroboter (100) nach Anspruch 3, 4 oder 5, wobei die Steuerung ferner konfiguriert ist, um durch Drehen in die zweite Position zu wechseln.

7. Rasenmähroboter (100) nach Anspruch 3, 4, 5 oder 6, wobei die Steuerung ferner konfiguriert ist, um durch Umfahren eines Objekts oder des beschatteten Bereichs in die zweite Position zu wechseln.

8. Rasenmähroboter (100) nach einem der vorstehenden Ansprüche, wobei die Steuerung ferner konfiguriert ist, um einen zukünftigen beschatteten Bereich proaktiv zu kartieren durch:
Erkennen von mindestens einem Objekt an einer ersten Position;
Wechseln in eine zweite Position; und
Erkennen mindestens eines zweiten Objekts an der zweiten Position, unabhängig von der Erkennung eines beschatteten Bereichs.

9. Rasenmähroboter (100) nach einem der vorstehenden Ansprüche, wobei der Abstandssensor ein Radarsensor (195) ist.

10. Rasenmähroboter (100) nach Anspruch 9, wobei die Steuerung ferner konfiguriert ist, um ein Objekt unter Verwendung des Abstandssensors (195) zu erkennen durch:
Empfangen einer Radarpunktwolke;
Bestimmen eines Ortes der Radarpunktwolke; und
Aufzeichnen des Objekts an dem bestimmten Ort.

11. Rasenmähroboter (100) nach Anspruch 9 oder 10, wobei die Steuerung ferner konfiguriert ist, um vor dem Aufzeichnen des bestimmten Ortes zu bestimmen, dass sich das Objekt nicht bewegt.

12. Rasenmähroboter (100) nach Anspruch 9, 10 oder 11, wobei die Steuerung ferner konfiguriert ist zum:
Bestimmen einer Ausdehnung der Radarpunktwolke,
Bestimmen eines angenommenen Schattens basierend auf der Ausdehnung der Radarpunktwolke, und
Kartieren eines Bereichs des angenommenen Schattens.

13. Rasenmähroboter (100) nach Anspruch 12, wobei die Steuerung ferner konfiguriert ist, um eine visuelle Klassifizierung des Objekts durchzuführen und den angenommenen Schatten ebenfalls basierend auf der visuellen Klassifizierung zu bestimmen.

14. Rasenmähroboter (100) nach einem der vorstehenden Ansprüche, wobei die Karte in einem entfernten Speicher gespeichert ist, der direkt oder indirekt mit dem Rasenmähroboter verbunden ist.

15. Verfahren zur Verwendung in einem Rasenmähroboter (100), der für den Betrieb in einem Betriebsbereich angeordnet ist, wobei der Rasenmähroboter einen Speicher, der zum Speichern eines Ortes von mindestens einem Objekt konfiguriert ist, einen Abstandssensor (195), einen Navigationssensor (185), der auf Signalempfang basiert, und eine Steuerung umfasst, wobei das Verfahren umfasst:
Bestimmen eines Ortes des Rasenmähroboters (100) unter Verwendung des Navigationssensors (185);
Bestimmen, dass ein beschatteter Bereich angetroffen wird, in dem die Navigation unter Verwendung des Navigationssensors nicht zuverlässig ist; und als Reaktion darauf
Navigieren unter Verwendung des Abstandssensors in dem beeschatteten Bereich basierend auf dem Erkennen von mindestens einem Objekt und einer Entfernung zu dem mindestens einen Objekt unter Verwendung des Abstandssensors (195), des gespeicherten Ortes des mindestens einen Objekts und des Ortes des Rasenmähroboters (100), wobei das Verfahren **dadurch gekennzeichnet ist, dass** das Verfahren ferner umfasst:
Bestimmen, dass der beschattete Bereich ausreichend kartiert ist, und als Reaktion darauf in den beeschatteten Bereich hineinzufahren, wobei das Verfahren ferner umfasst:
Bestimmen, dass der beschattete Bereich ausreichend kartiert ist, indem bestimmt wird, dass es dort gespeicherte Objekte gibt, die von dem Rasenmähroboter unter Verwendung des Abstandssensors (195) entlang einer geplanten Route des Rasenmähroboters erkannt werden können.

## Revendications

1. Tondeuse à gazon robotisée (100) conçue pour fonctionner dans une zone fonctionnelle, la tondeuse à gazon robotisée comprenant une mémoire configurée pour stocker un emplacement d'au moins un objet, un capteur de distance (195), un capteur de navigation (185) basé sur une réception de signal et un dispositif de commande, dans laquelle le dispositif de commande est configuré pour :
déterminer un emplacement de la tondeuse à gazon robotisée (100) en utilisant le capteur de navigation (185) ;
déterminer la rencontre avec une zone d'ombre, dans laquelle la navigation utilisant le capteur de navigation n'est pas fiable ; et en réponse à cela
naviguer en utilisant le capteur de distance dans la zone d'ombre sur la base de la détection d'au moins un objet et d'une distance par rapport à l'au moins un objet en utilisant le capteur de distance (195), l'emplacement stocké de l'au moins un objet et l'emplacement de la tondeuse à gazon robotisée (100), dans laquelle la tondeuse à gazon robotisée est **caractérisée en ce que** le dispositif de commande est en outre configuré pour déterminer que la zone d'ombre est suffisamment cartographiée et, en réponse à cela, entrer dans la zone d'ombre, dans laquelle le dispositif de commande est en outre configuré pour déterminer que la zone d'ombre est suffisamment cartographiée en déterminant qu'il existe des objets stockés qui seront détectables par la tondeuse à gazon robotisée en utilisant le capteur de distance (195) le long d'une trajectoire planifiée de la tondeuse à gazon robotisée.

2. Tondeuse à gazon robotisée (100) selon l'une quelconque revendication précédente, dans laquelle le dispositif de commande est en outre configuré pour déterminer que la tondeuse à gazon robotisée est entrée dans la zone d'ombre et, en réponse à cela, sortir de la zone d'ombre.

3. Tondeuse à gazon robotisée (100) selon l'une quelconque revendication précédente, dans laquelle le dispositif de commande est en outre configuré pour déterminer que la zone d'ombre est insuffisamment cartographiée et, en réponse à cela, cartographier la zone d'ombre par :
la détection d'au moins un objet au niveau d'une première position ;
passer à une seconde position ; et
la détection d'au moins un second objet au niveau de la seconde position.

4. Tondeuse à gazon robotisée (100) selon la revendication 3, dans laquelle le dispositif de commande est en outre configuré pour passer à la seconde position en se déplaçant vers la seconde position.

5. Tondeuse à gazon robotisée (100) selon la revendication 3 ou 4, dans laquelle le dispositif de commande est en outre configuré pour passer à la seconde position en zigzaguant.

6. Tondeuse à gazon robotisée (100) selon la revendication 3, 4 ou 5, dans laquelle le dispositif de commande est en outre configuré pour passer à la seconde position par rotation.

7. Tondeuse à gazon robotisée (100) selon la revendication 3, 4, 5 ou 6, dans laquelle le dispositif de commande est en outre configuré pour passer à la seconde position en contournant un objet ou la zone d'ombre

8. Tondeuse à gazon robotisée (100) selon l'une quelconque revendication précédente, dans laquelle le dispositif de commande est en outre configuré pour cartographier de manière proactive une future zone d'ombre par :
la détection d'au moins un objet au niveau d'une première position ;
passer à une seconde position ; et
la détection d'au moins un second objet au niveau de la seconde position, sans tenir compte de la détection d'une zone d'ombre.

9. Tondeuse à gazon robotisée (100) selon l'une quelconque revendication précédente, dans laquelle le capteur de distance est un capteur radar (195).

10. Tondeuse à gazon robotisée (100) selon la revendication 9, dans laquelle le dispositif de commande est en outre configuré pour détecter un objet en utilisant le capteur de distance (195) par :
la réception d'un nuage de points radar ;
la détermination d'un emplacement du nuage de points radar ; et
l'enregistrement de l'objet au niveau de l'emplacement déterminé.

11. Tondeuse à gazon robotisée (100) selon la revendication 9 ou 10, dans laquelle le dispositif de commande est en outre configuré pour déterminer que l'objet n'est pas en mouvement avant l'enregistrement de l'emplacement déterminé.

12. Tondeuse à gazon robotisée (100) selon la revendication 9, 10 ou 11, dans laquelle le dispositif de commande est en outre configuré pour
déterminer une extension du nuage de points radar,
déterminer une ombre supposée sur la base de l'extension du nuage de points radar et
cartographier une zone de l'ombre supposée.

13. Tondeuse à gazon robotisée (100) selon la revendication 12, dans laquelle le dispositif de commande est en outre configuré pour réaliser une classification visuelle de l'objet et déterminer l'ombre supposée également sur la base de la classification visuelle.

14. Tondeuse à gazon robotisée (100) selon l'une quelconque revendication précédente, dans laquelle la carte est stockée dans une mémoire à distance connectée directement ou indirectement à la tondeuse à gazon robotisée.

15. Procédé à utiliser dans une tondeuse à gazon robotisée (100) conçue pour fonctionner dans une zone fonctionnelle, la tondeuse à gazon robotisée comprenant une mémoire configurée pour stocker un emplacement d'au moins un objet, un capteur de distance (195), un capteur de navigation (185) basé sur la réception de signal et un dispositif de commande, le procédé comprenant :
la détermination d'un emplacement de la tondeuse à gazon robotisée (100) en utilisant le capteur de navigation (185) ;
la détermination de la rencontre avec une zone d'ombre, dans lequel la navigation utilisant le capteur de navigation n'est pas fiable ; et en réponse à cela
la navigation en utilisant le capteur de distance dans la zone d'ombre sur la base de la détection d'au moins un objet et d'une distance par rapport à l'au moins un objet en utilisant le capteur de distance (195), l'emplacement stocké de l'au moins un objet et l'emplacement de la tondeuse à gazon robotisée (100), dans lequel le procédé est **caractérisé en ce que** le procédé comprend en outre
le fait de déterminer que la zone d'ombre est suffisamment cartographiée et, en réponse à cela, entrer dans la zone d'ombre, dans lequel le procédé comprend en outre
le fait de déterminer que la zone d'ombre est suffisamment cartographiée en déterminant qu'il existe des objets stockés qui seront détectables par la tondeuse à gazon robotisée en utilisant le capteur de distance (195) le long d'une trajectoire planifiée de la tondeuse à gazon robotisée.
